# EUROPEAN PATENT APPLICATION

(11) **EP 3 974 268 A1**
(43) Date of publication of application: **30.03.2022**
(21) Application number: 21197958.8
(22) Date of filing: 21.09.2021
(51) Int. Cl.: B60W 10/06, B60W 10/08, B60W 10/26, B60W 20/13

(54) **CONTROL SYSTEM FOR AND CONTROL METHOD OF HYBRID VEHICLE**

(30) Priority: 23.09.2020 JP 2020158710
(71) Applicant: TOYOTA JIDOSHA KABUSHIKI KAISHA, Toyota-shi, Aichi-ken, 471-8571 (JP)
(72) Inventor: MIYAZATO, Yoshiaki, Aichi-ken, 471-8571 (JP); IWASE, Yuji, Aichi-ken, 471-8571 (JP); TABATA, Mitsuhiro, Aichi-ken, 471-8571 (JP); OTA, Atsuharu, Aichi-ken, 471-8571 (JP)
(74) Representative: D Young & Co LLP

(57) **Abstract**

A control system 1 for a hybrid vehicle (10) provided with an internal combustion engine (11) and an electric motor (12) is disclosed. The operation of the internal combustion engine is restricted within a variable restriction zone during a restricted period, and is permitted within the variable restriction zone during a permitted period. When it is determined that the vehicle is located within the variable restriction zone during the restricted period, the operation of the internal combustion engine is restricted, and the electric motor is operated so as to drive the vehicle. When it is determined that a time from a current timing, at which the vehicle is located outside the variable restriction zone or within the variable restriction zone during the permitted period, to a position start timing, at which the vehicle starts to be located within the variable restriction zone during the restricted period, is shorter than a predetermined set time, the increase speed of the SOC of the battery of the vehicle is increased as compared with the case in which it is determined that the time is longer than the set time.

## Description

### FIELD

The present disclosure relates to a control system for and a control method of a hybrid vehicle.

### BACKGROUND

Onboard equipment control systems are known that detect the current position of a vehicle and the current time and apply a particular control program when the current position is within a valid area and the current time is within a valid period (See, for example, Patent Literature 1). In an example of Patent Literature 1, the vehicle is a hybrid vehicle having an engine and an electric motor, the valid area is an area where the noise level and the exhaust gas amount of the hybrid vehicle are desired to be regulated, and the particular control program is a motive power control program which mainly uses the electric motor. That is, in this example, the operation of the engine is restricted when the hybrid vehicle travels within the valid area during the valid period, and the operation of the engine is permitted otherwise.

### [CITATIONS LIST]

### [PATENT LITERATURE]

[PTL 1] Japanese Unexamined Patent Publication (Kokai) No. H11(1999)-115651

### SUMMARY

### [TECHNICAL PROBLEM]

In Patent Literature 1, when the valid period arrives while the hybrid vehicle is traveling within the valid area, the engine operation is restricted and the power generation by the engine operation is restricted. As a result, while the hybrid vehicle travels within the valid area, the SOC of the hybrid vehicle's battery may continue to decrease, and the hybrid vehicle may not reach, for example, a destination. In other words, the SOC of the hybrid vehicle's battery may be insufficient.

### [SOLUTION TO PROBLEM]

According to the present disclosure, the followings are provided.
[Configuration 1] A control system for a hybrid vehicle provided with an internal combustion engine and an electric motor, wherein:
   a variable restriction zone, for which a restricted period and a permitted period are set in advance, is provided in advance, the operation of the internal combustion engine is restricted within the variable restriction zone during the restricted period, and the operation of the internal combustion engine is permitted within the variable restriction zone during the permitted period;
   when it is determined that the hybrid vehicle is located within the variable restriction zone during the restricted period, the operation of the internal combustion engine is restricted and the electric motor is operated so as to drive the hybrid vehicle; and
   when it is determined that a time from a current timing, at which the hybrid vehicle is located outside the variable restriction zone or within the variable restriction zone during the permitted period, to a position start timing, at which the hybrid vehicle starts to be located within the variable restriction zone during the restricted period, is shorter than a predetermined set time, the rate of increase of an SOC of a battery of the hybrid vehicle is increased or the rate of decrease of the SOC is decreased, when compared with a case in which it is determined that the time from the current timing to the position start timing is longer than the set time.
[Configuration 2] The control system according to Configuration 1, wherein the set time is set so that the SOC reaches a required SOC value at the position start timing.
[Configuration 3] The control system according to Configuration 2, wherein the required SOC value is an SOC required for the movement of the hybrid vehicle to a position at which the SOC can be increased, after the hybrid vehicle is located within the variable restriction zone during the restricted period, without the SOC falling below a lower limit value.
[Configuration 4] The control system according to any one of Configuration 1 to 3, wherein when it is determined that the time from the current timing to the position start timing is longer than the set time, an SOC increase promoting control for promoting an increase of the SOC or an SOC reduction limiting control for limiting a decrease of the SOC is not executed, and after that, when it is determined that the time from the current timing to the position start timing has reached the set time, the SOC increase promoting control or the SOC reduction limiting control is executed until the hybrid vehicle is located within the variable restriction zone during the restricted period.
[Configuration 5] A control method of a hybrid vehicle provided with an internal combustion engine and an electric motor, wherein:
   a variable restriction zone, for which a restricted period and a permitted period are set in advance, is provided in advance, the operation of the internal combustion engine is restricted within the variable restriction zone during the restricted period, and the operation of the internal combustion engine is permitted within the variable restriction zone during the permitted period;
   when it is determined that the hybrid vehicle is located within the variable restriction zone during the restricted period, the operation of the internal combustion engine is restricted, and the electric motor is operated so as to drive the hybrid vehicle; and
   when it is determined that a time from a current timing, at which the hybrid vehicle is located outside the variable restriction zone or within the variable restriction zone during the permitted period, to a position start timing, at which the hybrid vehicle starts to be located within the variable restriction zone during the restricted period, is shorter than a predetermined set time, the rate of increase of an SOC of a battery of the hybrid vehicle is increased or the rate of decrease of the SOC is decreased, when compared with a case in which it is determined that the time from the current timing to the position start timing is longer than the set time.

### [ADVANTAGEOUS EFFECTS OF INVENTION]

When a variable restriction zone is provided, it is possible to limit a shortage of the SOC of the battery of the hybrid vehicle.

### BRIEF DESCRIPTION OF DRAWINGS

FIG. 1 is a schematic overall view of a control system of an embodiment according to the present disclosure.
Fig. 2 is a schematic view of a restriction zone of an embodiment according to the present disclosure.
FIG. 3 is a schematic diagram of (A) a variable restriction zone and (B) a fixed restriction zone in an embodiment according to the present disclosure.
Fig. 4 is a schematic diagram for explaining the communication between a vehicle and a server in an embodiment according to the present disclosure.
FIG. 5 is a schematic diagram for explaining the communication between a vehicle and a server in another embodiment according to the present disclosure.
FIG. 6 is a schematic time chart showing a case where a vehicle, which is located outside an in-operation restriction zone at the current timing, will be subsequently located within the in-operation restriction zone.
FIG. 7 is a schematic time chart showing a case where a vehicle, which is located outside an in-operation restriction zone at the current timing, will be subsequently located within the in-operation restriction zone.
FIG. 8 is a schematic time chart showing a case where a vehicle, which is located outside an in-operation restriction zone at the current timing, will be subsequently located within the in-operation restriction zone.
FIG. 9 is a schematic time chart showing a case where a vehicle, which is located outside an in-operation restriction zone at the current timing, will be subsequently located within the in-operation restriction zone.
FIG. 10 is a time chart for explaining an SOC increase promoting control in an embodiment according to the present disclosure.
FIG. 11 is a time chart for explaining an SOC reduction limiting control in another embodiment according to the present disclosure.
FIG. 12 is a flowchart for executing a vehicle driving control routine in an embodiment according to the present disclosure.
FIG. 13 is a flowchart for executing a vehicle driving control routine of an embodiment according to the present disclosure.
FIG. 14 is a functional block diagram of a vehicle in an embodiment according to the present disclosure.
FIG. 15 is a functional block diagram of a server in an embodiment according to the present disclosure.

### DESCRIPTION OF EMBODIMENTS

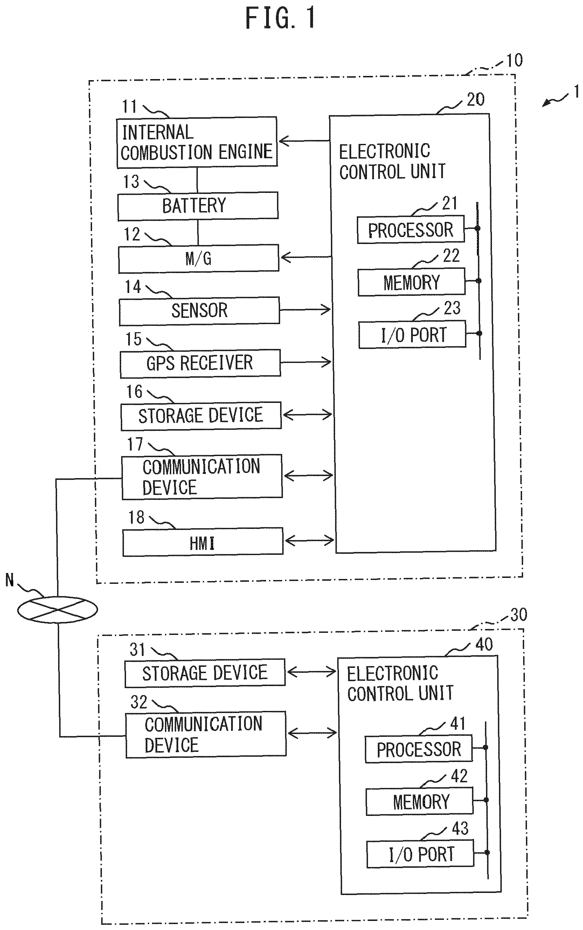

Referring to FIG. 1, a control system 1 for a hybrid vehicle of an embodiment according to the present disclosure comprises a hybrid vehicle 10 and a server 30 outside of the hybrid vehicle 10.

The hybrid vehicle 10 of the embodiment according to the present disclosure comprises an internal combustion engine 11, a motor generator (M/G) 12, a battery 13, at least one sensor 14, a GPS receiver 15, a storage device 16, a communication device 17, an HMI (human machine interface) 18, and an electronic control unit 20.

The internal combustion engine 11 of the embodiment according to the present disclosure is composed of, for example, a spark ignition engine or a compression ignition engine. The internal combustion engine 11 (for example, a fuel injection valve, a spark plug, a throttle valve, etc.) is controlled based on a signal from the electronic control unit 20.

Further, the motor generator 12 of the embodiment according to the present disclosure operates as an electric motor or a power generator. The motor generator 12 is controlled based on a signal from the electronic control unit 20.

In the embodiment according to the present disclosure, the driving mode of the hybrid vehicle 10 can be switched between an EV mode and an HV mode. In the EV mode of the embodiment according to the present disclosure, the motor generator 12 is operated as an electric motor while the internal combustion engine 11 is stopped. In this respect, an output of the motor generator 12 is transmitted to an axle. On the other hand, in the HV mode of the embodiment according to the present disclosure, the internal combustion engine 11 is operated, and the motor generator 12 is operated as an electric motor. In this respect, in one example, an output of the internal combustion engine 11 and an output of the motor generator 12 are transmitted to the axle. In another example, an output of the motor generator 12 is transmitted to the axle, an output of the internal combustion engine 11 is transmitted to a power generator (not shown), and the power generator is operated. Electric power generated by the power generator is sent to the motor generator 12 or the battery 13. In yet another example, a part of an output of the internal combustion engine 11 and an output of the motor generator 12 are transmitted to the axle, and the rest of the output of the internal combustion engine 11 is transmitted to the power generator. The electric power generated by the power generator is sent to the motor generator 12 or the battery 13. Further, in the embodiment according to the present disclosure, in the EV mode and the HV mode, a regenerative control using the motor generator 12 as a power generator is performed during, for example, a deceleration operation. The electric power generated by the regenerative control is sent to the battery 13.

The battery 13 of the embodiment according to the present disclosure is charged with electric power from the motor generator 12 operating as a power generator, or a power generator (not shown) driven by the internal combustion engine 11. In another embodiment (not shown), the battery 13 can also be charged by an external power source. On the other hand, in the embodiment according to the present disclosure, electric power is supplied from the battery 13 to the motor generator 12 that operates as an electric motor, the electronic control unit 20, and other onboard equipment.

The sensors 14 of the embodiment according to the present disclosure detect various raw data. The sensors 14 of the embodiment according to the present disclosure include, for example, a load sensor for detecting a required vehicle load represented by an amount of depression of an accelerator pedal, a throttle position sensor for detecting a throttle position of the internal combustion engine 11, an NOx sensor for detecting an NOx concentration in the exhaust gas of the internal combustion engine 11, a rotation speed sensor for detecting a rotation speed of the internal combustion engine 11, a voltmeter and a current meter for detecting a voltage and a current of the battery 13, a speed sensor for detecting a speed of the vehicle 10, etc. Output signals of these sensors 14 are input to the electronic control unit 20.

The GPS receiver 15 of the embodiment according to the present disclosure receives signals from GPS satellites, thereby detecting information representing an absolute position (for example, longitude and latitude) of the vehicle 10. The position information of the vehicle 10 is input to the electronic control unit 20.

Various data are stored in advance in the storage device 16 of the embodiment according to the present disclosure. The communication device 17 of the embodiment according to the present disclosure can be connected to a communication network N such as the Internet.

The HMI 18 of the embodiment according to the present disclosure exchanges information between an occupant(s) (including a driver) of the vehicle 10 and the control system 1. Specifically, the HMI 18 includes a notification function for giving, for example, visual, auditory, tactile, or olfactory notification to the occupant of the vehicle 10, and an input function for receiving inputs from the occupant of the vehicle 10. The HMI 18 includes, for example, a display, a lamp, a speaker, a vibrator, etc. for the notification function, and a touch panel, a button, a switch, etc. for the input function. In another embodiment (not shown), the HMI 18 has a notification function without an input function.

The electronic control unit 20 of the vehicle 10 of the embodiment according to the present disclosure comprises one or more processors 21, one or more memories 22 and an input/output (I/O) port 23, which are communicably connected to one another by a bidirectional bus. The memories 22 comprise, for example, a ROM, a RAM, etc. Various programs are stored in the memories 22, and various functions are realized by executing these programs in the processors 21. The above-mentioned internal combustion engine 11, motor generator 12, sensors 14, GPS receiver 15, storage device 16, communication device 17, and HMI 18 are communicably connected to the input/output port 23 of the embodiment according to the present disclosure. Further, in the processors 21 of the embodiment according to the present disclosure, the SOC or charge rate of the battery 13 is calculated based on, for example, the voltage and current of the battery 13.

Further, referring to FIG. 1, the server 30 of the embodiment according to the present disclosure comprises a storage device 31, a communication device 32, and an electronic control unit 40.

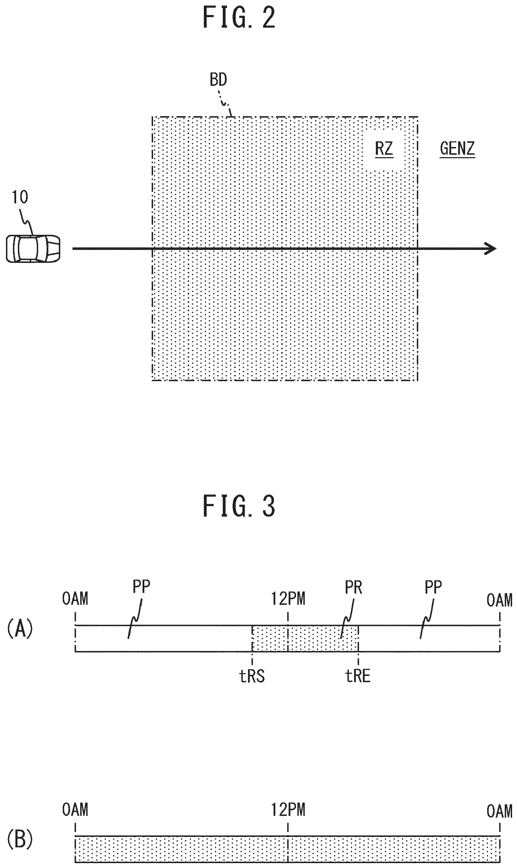

The storage device 31 of the embodiment according to the present disclosure stores information on a predetermined restriction zone. FIG. 2 schematically shows an example of a restriction zone RZ of an embodiment according to the present disclosure. The restriction zone RZ of the embodiment according to the present disclosure is surrounded by a closed boundary BD. The restriction zone RZ is set, for example, in an urban area. In the embodiment according to the present disclosure, a region outside the restriction zone RZ is referred to as a general zone GENZ.

The communication device 32 of the embodiment according to the present disclosure can be connected to the communication network N. Therefore, the vehicle 10 and the server 30 can be connected to each other via the communication network N.

As in the electronic control unit 20 of the vehicle 10, the electronic control unit 40 of the server 30 of the embodiment according to the present disclosure comprises one or more processors 41, one or more memories 42, and an input/output port 43, which are communicatively connected to one another by a bidirectional bus. The above-mentioned storage device 31 and communication device 32 are communicably connected to the input/output port 43 of the embodiment according to the present disclosure.

In the restriction zone RZ of the embodiment according to the present disclosure, the operation of the internal combustion engine 11 is restricted at least temporarily. In one example, the operation of the internal combustion engine 11 is prohibited at least temporarily.

In the restriction zone RZ of an example shown in FIG. 3(A), a restricted period PR from a restriction start timing tRS to a restriction end timing tRE, and a permitted period PP other than the restricted period PR are set in a predetermined period, for example, one day (24 hours). The operation of the internal combustion engine 11 is restricted in the restriction zone RZ during the restricted period PR, and the operation of the internal combustion engine 11 is permitted in the restriction zone RZ during the permitted period PP other than the restricted period PR. In the embodiment according to the present disclosure, such a restriction zone is referred to as a variable restriction zone. In another embodiment (not shown), the restricted period PR is set multiple times a day. In yet another embodiment (not shown), the restricted period PR is set in units such as day of week, day, week, month, and so on. On the other hand, in the restriction zone RZ of an example shown in FIG. 3(B), the operation of the internal combustion engine 11 is continuously restricted regardless of the time or the like. In the embodiment according to the present disclosure, such a restriction zone is referred to as a fixed restriction zone.

That is, in the embodiment according to the present disclosure, the operation of the internal combustion engine 11 is restricted when the vehicle 10 is located within the variable restriction zone RZ during the restricted period PR or the fixed restriction zone RZ. Note that, in the embodiment according to the present disclosure, the variable restriction zone RZ during the restricted period PR or the fixed restriction zone RZ may be referred to as an in-operation restriction zone RZR. On the contrary, when the vehicle 10 is located in the variable restriction zone RZ during the permitted period PP or the general zone GENZ, the operation of the internal combustion engine 11 is permitted.

Restrictions for the operation of the internal combustion engine 11 in the in-operation restriction zone RZR are based on statutory or non-statutory rules. In one example, violating these rules will result in penalties, such as fines. In another example, observing these rules gives incentives such as points.

In the embodiment according to the present disclosure, whether the vehicle 10 is located within the restriction zone RZ or the general zone GENZ at the current timing is determined. Note that the restriction zone RZ in this respect includes a variable restriction zone RZ during the restricted period, a variable restriction zone RZ during the permitted period, and a fixed restriction zone RZ.

When it is determined that the vehicle 10 is located within the general zone GENZ at the current timing, the driving mode of the vehicle 10 is set to the EV mode or the HV mode. In one example, the EV mode is set when the required output of the vehicle 10 is smaller than a predetermined set output, and the HV mode is set when the required output is larger than the set output. Further, the EV mode is set when the SOC of the battery 13 is higher than a predetermined set SOC, and the HV mode is set when the SOC is lower than the set SOC. In the HV mode in this respect, the internal combustion engine 11 operates the power generator, and the SOC of the battery 13 is increased. Note that, in the embodiment according to the present disclosure, such a control of the driving mode is referred to as a normal control.

On the contrary, when it is determined that the vehicle 10 is located within the restriction zone RZ at the current timing, whether the restriction zone RZ is the variable restriction zone RZ or the fixed restriction zone RZ is determined.

When it is determined that the restriction zone RZ, in which the vehicle 10 is located, is the fixed restriction zone RZ, the driving mode of the vehicle 10 is set to the EV mode. That is, the operation of the internal combustion engine 11 is restricted.

On the other hand, when it is determined that the restriction zone RZ, in which the vehicle 10 is located, is the variable restriction zone RZ, whether the current timing is within the restricted period PR of the variable restriction zone RZ is then determined. When it is determined that the current timing is within the restricted period PR in the variable restriction zone RZ, the driving mode of the vehicle 10 is set to the EV mode. On the contrary, when it is determined that the current timing is within the permitted period PP in the variable restriction zone RZ, a normal control is performed.

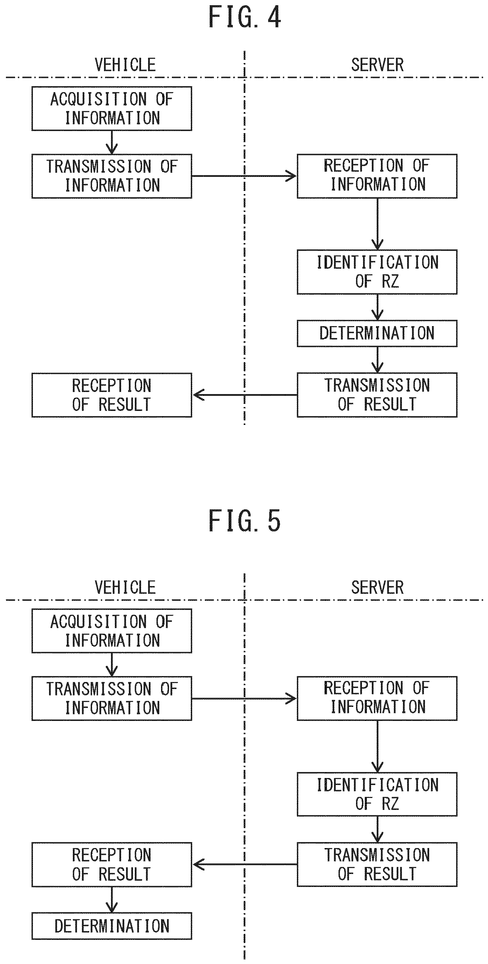

In the embodiment according to the present disclosure, the determination as to whether the vehicle 10 is located within the restriction zone RZ is performed, for example, as follows. That is, as shown in FIG. 4, first, in the vehicle 10, the position information of the vehicle 10 at the current timing is acquired from the GPS receiver 15. Then, the position information is transmitted from the vehicle 10 and received by the server 30. In the server 30, a restriction zone RZ in the vicinity of the vehicle 10 at the current timing is identified based on the position information of the vehicle 10, and the information of the identified restriction zone RZ is extracted from the storage device 31. The information of the restriction zone RZ in the storage device 31 includes the position information of the restriction zone RZ (for example, latitude and longitude) as well as the information as to whether the restriction zone RZ is a variable restriction zone or a fixed restriction zone, and in the case of a variable restriction zone, the information of the restricted period PR (for example, the restriction start timing tRS and the restriction end timing tRE), etc. Then, in the server 30, whether the vehicle 10 is located within the restriction zone RZ identified at the current timing, whether the restriction zone RZ, in which the vehicle 10 is located, is a variable restriction zone, whether the current timing is within the restricted period PR, or the like, is determined. Then, a result of the determination is transmitted from the server 30 and received by the vehicle 10.

On the contrary, in another embodiment shown in FIG. 5, first, in the vehicle 10, the position information of the vehicle 10 at the current timing is acquired. Then, the position information is transmitted from the vehicle 10 and received by the server 30. In the server 30, a restriction zone RZ in the vicinity of the vehicle 10 at the current timing is identified based on the position information of the vehicle 10, and the information of the identified restriction zone RZ is extracted from the storage device 31. Then, the information of the identified restriction zone RZ is transmitted from the server 30 and received by the vehicle 10. Then, in the vehicle 10, whether the vehicle 10 is located within the identified restriction zone RZ at the current timing, or the like is determined.

In yet another embodiment (not shown), the information of the restriction zone RZ is stored in the storage device 16 of the vehicle 10. In this respect, the vehicle 10 identifies the restriction zone RZ, and determines whether the vehicle 10 is located within the restriction zone RZ, or the like, without communicating with the server 30.

By the way, even if the vehicle 10 is located outside the in-operation restriction zone RZR at the current timing, the vehicle 10 may be subsequently located within the in-operation restriction zone RZR.

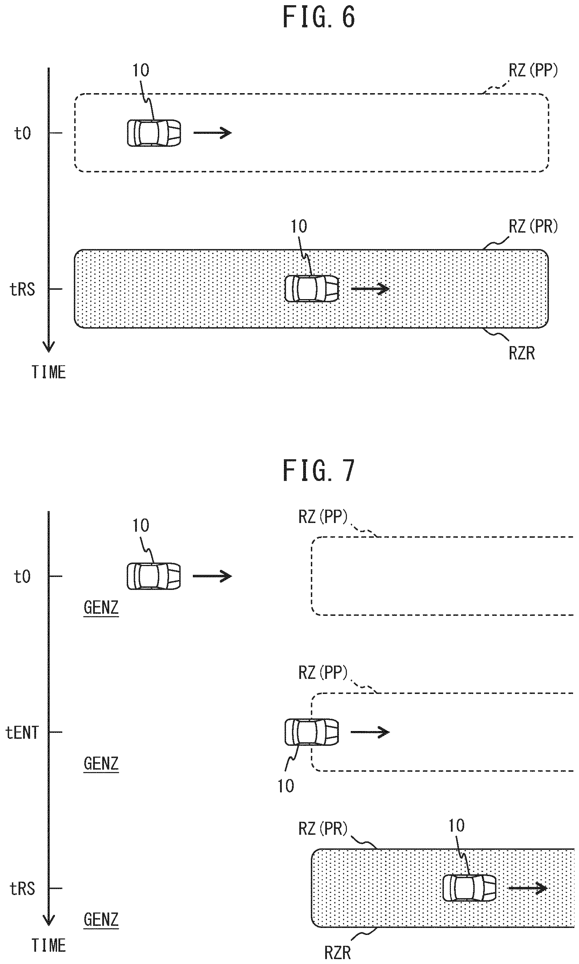

That is, in an example shown in FIG. 6, the vehicle 10 is located within the variable restriction zone RZ (PR) during the permitted period PP at the current timing t0. If the vehicle 10 continues to be located within the variable restriction zone RZ, and then, when the restriction start timing tRS arrives, the vehicle 10 will be located within the variable restriction zone RZ (PR) during the restricted period, i.e., the in-operation restriction zone RZR.

In an example shown in FIG. 7, the vehicle 10 is located within the general zone GENZ at the current timing t0. At this time, the variable restriction zone RZ in the vicinity of the vehicle 10 is in the permitted period PP. Then, at an entry timing tENT, the vehicle 10 enters the variable restriction zone RZ (PP) during the permitted period PP. Then, at the restriction start timing tRS, the vehicle 10 will be located within the variable restriction zone RZ (PR) during the restricted period, i.e., within the in-operation restriction zone RZR.

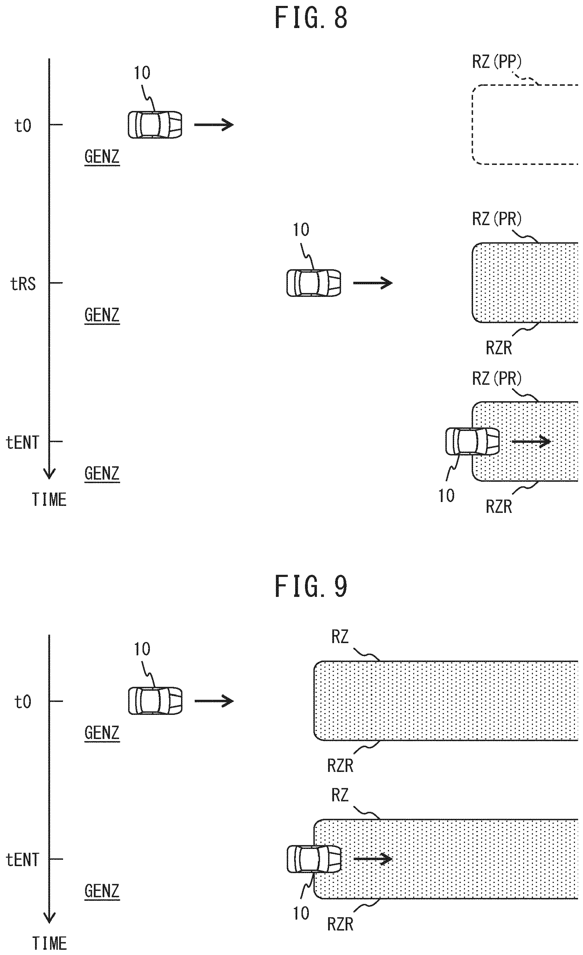

In an example shown in FIG. 8, the vehicle 10 is located within the general zone GENZ at the current timing t0. At this time, the variable restriction zone RZ in the vicinity of the vehicle 10 is in the permitted period PP. The vehicle 10 is still located within the general zone GENZ at the subsequent restriction start timing tRS. Then, at the entry timing tENT, the vehicle 10 enters the variable restriction zone RZ (PR) during the restricted period PR. Therefore, the vehicle 10 is located within the in-operation restriction zone RZR.

In an example shown in FIG. 9, the vehicle 10 is located within the general zone GENZ at the current timing t0. Then, at the entry timing tENT, the vehicle 10 enters the fixed restriction zone RZ and is located within the in-operation restriction zone RZR.

Note that, in the examples shown in FIGS. 6 and 7 described above, the vehicle 10 starts to be located within the in-operation restriction zone RZR at the restriction start timing tRS. On the other hand, in the examples shown in FIGS. 8 and 9, the vehicle 10 starts to be located within the in-operation restriction zone RZR at the entry timing tENT. In the embodiment according to the present disclosure, the timing, at which the vehicle 10 starts to be located within the in-operation restriction zone RZR, is referred to as a position start timing tPS. This position start timing tPS is the restriction start timing tRS in the examples shown in FIGS. 6 and 7, and is the entry timing tENT in the examples shown in FIGS. 8 and 9.

When the vehicle 10 is located within the in-operation restriction zone RZR, the operation of the internal combustion engine 11 is restricted, and therefore, the power generation in the vehicle 10 is restricted. Therefore, the SOC of the battery 13 may be reduced, and the vehicle 10 may be unable to reach, for example, the charging equipment in the restriction zone RZ, or the outside of the in-operation restriction zone RZR.

Thus, in the embodiment according to the present disclosure, roughly speaking, an SOC control is performed for increasing the SOC of the battery 13 or limiting reduction of the SOC, before the vehicle 10 is located within the in-operation restriction zone RZR, i.e., before the position start timing tPS. In one example, an SOC control is performed to make the SOC, at a time when the vehicle 10 starts to be located within the in-operation restriction zone RZR, equal to an required SOC value. The required SOC value is, for example, an SOC which is required for the vehicle 10 to move to a position where the SOC can be increased without the SOC falling below a lower limit value SOCL, after the vehicle 10 is located within the in-operation restriction zone RZR. Here, the lower limit value SOCL is an SOC which makes recovery of the SOC extremely difficult if the SOC falls below the lower limit value SOCL. Note that, the position where the SOC can be increased includes, for example, a charging facility, a variable restriction zone RZ during the permitted period PP, a general zone GENZ, a downhill, etc.

In an example of the SOC control, an SOC increase promoting control is performed. In the SOC increase promoting control, for example, the internal combustion engine 11 is operated, and the power generator is operated by at least a part of the output of the internal combustion engine 11, whereby the increase speed of the SOC is made larger than that in a normal control. As a result, a lack of the SOC is limited when the vehicle 10 is located in the in-operation restriction zone RZR.

In this respect, it is possible to perform the SOC increase promoting control from the current timing t0 to the position start timing tPS. However, if the SOC increase promoting control starts from the current timing t0, the SOC may be excessive.

Thus, in the embodiment according to the present disclosure, a predicted SOC value SOCP at the position start timing tPS is calculated on the assumption that the SOC increase promoting control has been performed from the current timing to the position start timing tPS. When the predicted SOC value SOCP is larger than the required SOC value SOCR, the SOC increase promoting control is not performed. The predicted SOC value SOCP decreases with the passage of time. Then, when the predicted SOC value SOCP reaches the required SOC value SOCR, the SOC increase promoting control is started. Then, when the position start timing tPS arrives, the SOC increase promoting control is terminated. As a result, an excess of the SOC is limited while a shortage of the SOC is limited.

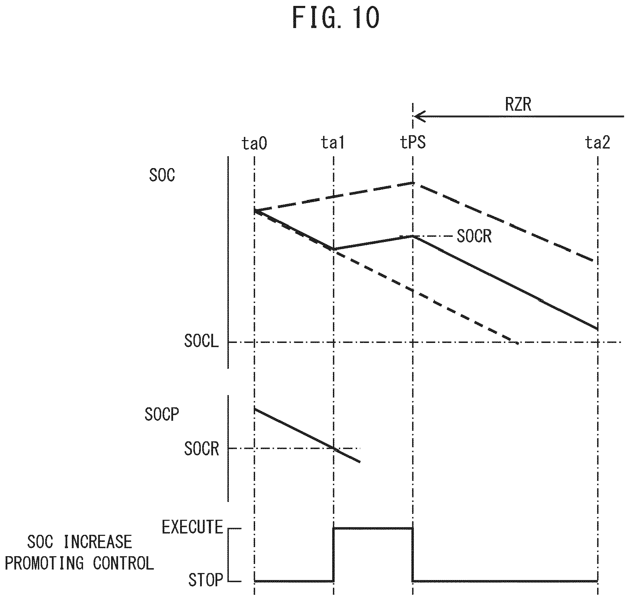

That is, in an example shown in FIG. 10, if the SOC increase promoting control is performed from the timing ta0 to the position start timing tPS, the SOC at the position start timing tPS is excessive with respect to the required SOC value SOCR as designated by a broken line. Thus, in the embodiment according to the present disclosure, when the predicted SOC value SOCP reaches the required SOC value SOCR at the timing ta1, the SOC increase promoting control is started. As a result, the SOC increases, as designated by a solid line in FIG. 10. Then, when the position start timing tPS arrives, the SOC increase promoting control is terminated. The SOC at this time is equal to the required SOC value SOCR.

In FIG. 10, ta2 indicates the timing at which the vehicle 10 reaches a destination. In this way, in the embodiment according to the present disclosure, the vehicle 10 reaches the destination without the SOC falling below the lower limit value SOCL. On the contrary, in FIG. 10, the dotted line indicates the SOC where the SOC increase promoting control is not performed. In this respect, the SOC falls below the lower limit SOCL before the vehicle 10 reaches the destination.

In another example of the SOC control, a SOC reduction limiting control is performed. In the SOC reduction limiting control, for example, the internal combustion engine 11 is operated, and a power generator is operated by at least a part of the output of the internal combustion engine 11, whereby the reduction speed of the SOC is made smaller than that in a normal control. In one example, the SOC is kept constant.

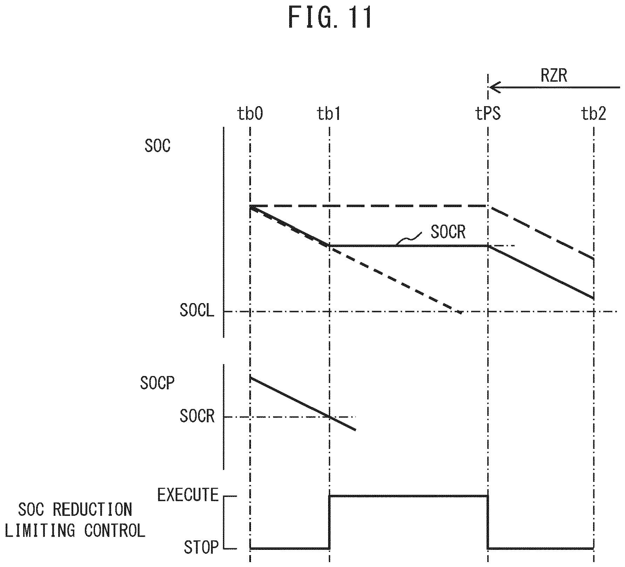

In this respect, as shown in FIG. 11, if the SOC reduction limiting control is performed from the timing tb0 to the position start timing tPS, the SOC at the position start timing tPS is excessive with respect to the required SOC value SOCR as designated by a broken line. In the embodiment according to the present disclosure, an predicted SOC value SOCP at the position start timing tPS is calculated on the assumption that the SOC reduction limiting control has been performed until the position start timing tPS. When the predicted SOC value SOCP is larger than the required SOC value SOCR, the SOC reduction limiting control is not performed. The predicted SOC value SOCP decreases with the passage of time, as shown in FIG. 11. Then, at the timing tb1, when the predicted SOC value SOCP reaches the required SOC value SOCR, the SOC reduction limiting control is started. As a result, the SOC is maintained, as designated by a solid line in FIG. 11. Then, when the position start timing tPS arrives, the SOC reduction limiting control is terminated. The SOC at this time is equal to the required SOC value SOCR. Note that, in FIG. 11, tb2 indicates the timing at which the vehicle 10 reaches, for example, a destination, and the dotted line indicates the SOC when the SOC reduction limiting control is not performed.

Note that, in the embodiment according to the present disclosure, when it is determined that the vehicle 10 is located outside the restriction zone RZ at the current timing, a route information of the vehicle 10 is acquired, and whether the vehicle 10 is scheduled to subsequently enter the restriction zone RZ is determined based on this route information. For example, in the case where the vehicle 10 has an automatic driving function, information on the route of the vehicle 10 set by the automatic driving function is acquired. Alternatively, the route of the vehicle 10 is predicted based on the travel history of the vehicle 10. Note that, the route information is, for example, in the form of a combination of a plurality of future times and the position of the vehicle 10 at each time. Further, in the embodiment according to the present disclosure, when it is determined that the vehicle 10 is scheduled to enter the restriction zone RZ, the entry timing tENT is calculated from, for example, the route information of the vehicle 10, the position information of the restriction zone RZ, and the information of the restricted period PR. Further, the position start timing tPS is calculated as the delayed one of the entry timing tENT and the restriction start timing tRS.

For example, as shown in FIG. 4, in the case where the server 30 determines whether the vehicle 10 is located within the restriction zone RZ, the server 30 determines whether the vehicle 10 is scheduled to enter the restriction zone RZ. In this respect, the route information of the vehicle 10 is transmitted from the vehicle 10 to the server 30 together with the position information of the vehicle 10. On the contrary, as shown in, for example, FIG. 5, in the case where the vehicle 10 determines whether the vehicle 10 is located within the restriction zone RZ, the vehicle 10 determines whether the vehicle 10 is scheduled to enter the restriction zone RZ. In this respect, it is not necessary to transmit the route information of the vehicle 10 from the vehicle 10 to the server 30.

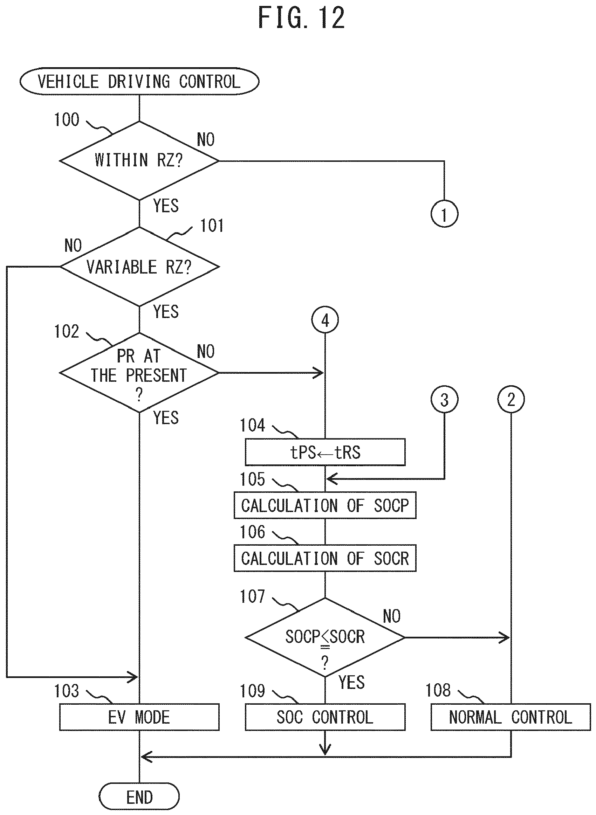

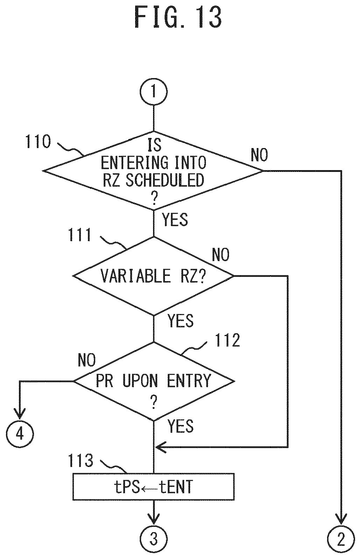

FIGS. 12 and 13 show a routine for executing a driving control for the vehicle 10 in the embodiment according to the present disclosure. This routine is repeatedly executed in the electronic control unit 20 of the vehicle 10.

With reference to FIGS. 12 and 13, first, at step 100, whether the vehicle 10 is located within the restriction zone RZ at the current timing is determined. When it is determined that the vehicle 10 is located within the restriction zone RZ at the current timing, the process shifts from step 100 to step 101, and whether the restriction zone RZ in question is a variable restriction zone or a fixed restriction zone is determined. When it is determined that the restriction zone RZ is a variable restriction zone, the process then shifts to step 102, and whether the current timing is within the restricted period PR is determined. When the current timing is within the restricted period PR, the process then shifts to step 103, and the EV mode is performed. That is, the operation of the internal combustion engine 11 is restricted. When it is also determined at step 101 that the restriction zone RZ is a fixed restriction zone, the process shifts to step 103, and the EV mode is performed.

On the contrary, when it is determined at step 102 that the current timing is out of the restricted period PR, i.e., within the permitted period PP, the process then shifts to step 104, and the position start timing tPS is set to the restriction start timing tRS. Subsequently, at step 105, a predicted SOC value SOCP is calculated on the assumption that the SOC increase promoting control has been performed from the current timing to the restriction start timing tRS. Subsequently, at step 106, a required SOC value SOCR is calculated. Subsequently, at step 107, whether the predicted SOC value SOCP is equal to or less than the required SOC value SOCR is determined. When SOCP > SOCR, the process then shifts to step 108, and a normal control is performed. On the contrary, when SOCP ≤ SOCR, the process shifts to step 109, and an SOC control is performed.

On the other hand, at step 100, when it is determined that the vehicle 10 is located outside the restriction zone RZ at the current timing, the process then shifts to step 110, and whether the vehicle 10 is scheduled to enter the restriction zone RZ is determined. When it is determined that the vehicle 10 is not scheduled to enter the restriction zone RZ, the process then shifts to step 108.

On the contrary, when it is determined that the vehicle 10 is scheduled to enter the restriction zone RZ, the process shifts from step 110 to step 111, and whether the restriction zone RZ in question is a variable restriction zone or a fixed restriction zone is determined. When it is determined that the restriction zone RZ is a variable restriction zone, the process then shifts to step 112, and whether the entry timing tENT, at which the vehicle 10 enters the restriction zone RZ, is within the restricted period PR is determined. When the entry timing tENT is within the restricted period PR, the process then shifts to step 113, and the position start timing tPS is set to the entry timing tENT. Then, the process shifts to step 105, and a predicted SOC value SOCP is calculated on the assumption that the SOC increase promoting control is performed from the current timing to the entry timing tENT. On the other hand, when it is determined at step 112 that the entry timing tENT is out of the restricted period PR, i.e., within the permitted period PP, the process then shifts to step 104, and the position start timing tPS is set to the restriction start timing tRS.

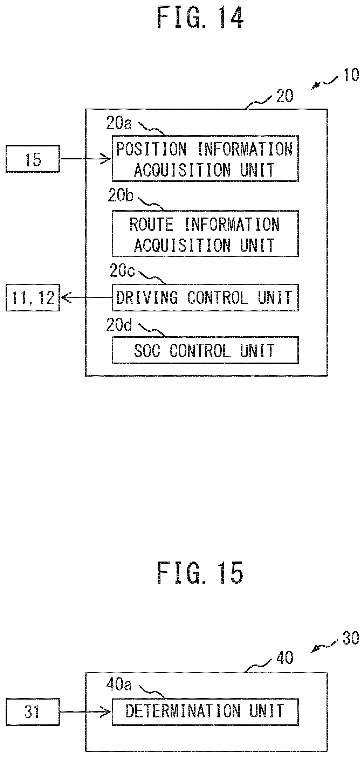

FIG. 14 shows a functional block diagram of the vehicle 10 of the embodiment according to the present disclosure. Referring to FIG. 14 while referring to FIG. 4, the electronic control unit 20 of the vehicle 10 of the embodiment according to the present disclosure includes a position information acquisition unit 20a, a route information acquisition unit 20b, a driving control unit 20c, and an SOC control unit 20d.

In an example shown in FIG. 14, the position information acquisition unit 20a acquires the position information of the vehicle 10 from the GPS receiver 15 and transmits it to the server 30. The route information acquisition unit 20b acquires the route information of the vehicle 10 and transmits it to the server 30. The driving control unit 20c changes the driving mode between the EV mode and the HV mode. The SOC control unit 20d performs the above-mentioned SOC control.

On the other hand, FIG. 15 shows a functional block diagram of the server 30 of the embodiment according to the present disclosure. Referring to FIG. 15 while referring to FIG. 4, the electronic control unit 40 of the server 30 of the embodiment according to the present disclosure includes a determination unit 40a. In an example shown in FIG. 15, the determination unit 40a determines whether the vehicle 10 is located within the restriction zone RZ at the current timing, and transmits a result of the determination to the vehicle 10. Further, the determination unit 40a determines, as necessary, whether the vehicle 10 is scheduled to enter the restriction zone RZ, and transmits a result of the determination to the vehicle 10. Further, the determination unit 40a calculates, as necessary, a position start timing tPS.

In another embodiment shown in FIG. 5, the electronic control unit 20 of the vehicle 10 further comprises a determination unit similar to the determination unit 40a described above.

By the way, in the example shown in FIG. 10, as described above, the SOC increase promoting control is not performed when SOCP > SOCR, but is performed when SOCP = SOCR at time ta1. In the example shown in FIG. 11, the SOC reduction limiting control is not performed when SOCP > SOCR, but is performed when SOCP = SOCR at time tb1. Here, focusing on a pre-restriction time, which is a duration from the current timing to the position start timing tPS (that is, the time from the current timing until the vehicle 10 starts to be located within the in-operation restriction zone RZR), and a predetermined set time, which is a duration from the time at which SOCP = SOCR (ta1 in the example of FIG. 10 and tb1 in the example of FIG. 11), to the position start timing tPS, in the embodiment according to the present disclosure, the rate of increase of the SOC of the battery 13 will be increased or the rate of decrease of the SOC will be decreased when the pre-restriction time is shorter than the set time, as compared with a case where it is determined that the pre-restriction time is longer than the set time.

Note that the set time in this respect is a duration from the time (ta1, tb1) at which the predicted SOC value SOCP at the position start timing tPS reaches the required SOC value SOCR, to the position start timing tPS, on the assumption that an SOC control has been executed from the current timing at which the vehicle 10 is located outside the in-operation restriction zone RZR, to the position start timing tPS.

On the other hand, focusing on the predicted SOC value SOCP and the required SOC value SOCR, in the embodiment according to the present disclosure, when the predicted SOC value SOCP is larger than the required SOC value SOCR, the SOC control (the SOC increase promoting control or the SOC decrease limiting control) will be terminated, and when the predicted SOC value SOCP is equal to or less than the required SOC value SOCR, the SOC control will be performed.

This application claims the benefit of Japanese Patent Application No. 2020-158710, the entire disclosure of which is incorporated by reference herein.

### REFERENCE SIGNS LIST

- 1: control system
- 10: hybrid vehicle
- 11: internal combustion engine
- 12: motor generator
- 20: electronic control unit for a vehicle
- 30: server
- 40: electronic control unit for a server

## Claims

1. A control system for a hybrid vehicle provided with an internal combustion engine and an electric motor, wherein:
a variable restriction zone, for which a restricted period and a permitted period are set in advance, is provided in advance, the operation of the internal combustion engine is restricted within the variable restriction zone during the restricted period, and the operation of the internal combustion engine is permitted within the variable restriction zone during the permitted period;
when it is determined that the hybrid vehicle is located within the variable restriction zone during the restricted period, the operation of the internal combustion engine is restricted and the electric motor is operated so as to drive the hybrid vehicle; and
when it is determined that a time from a current timing, at which the hybrid vehicle is located outside the variable restriction zone or within the variable restriction zone during the permitted period, to a position start timing, at which the hybrid vehicle starts to be located within the variable restriction zone during the restricted period, is shorter than a predetermined set time, the rate of increase of an SOC of a battery of the hybrid vehicle is increased or the rate of decrease of the SOC is decreased, when compared with a case in which it is determined that the time from the current timing to the position start timing is longer than the set time.

2. The control system according to claim 1, wherein the set time is set so that the SOC reaches a required SOC value at the position start timing.

3. The control system according to claim 2, wherein the required SOC value is an SOC required for the movement of the hybrid vehicle to a position at which the SOC can be increased, after the hybrid vehicle is located within the variable restriction zone during the restricted period, without the SOC falling below a lower limit value.

4. The control system according to any one of claims 1 to 3, wherein when it is determined that the time from the current timing to the position start timing is longer than the set time, an SOC increase promoting control for promoting an increase of the SOC or an SOC reduction limiting control for limiting a decrease of the SOC is not executed, and after that, when it is determined that the time from the current timing to the position start timing has reached the set time, the SOC increase promoting control or the SOC reduction limiting control is executed until the hybrid vehicle is located within the variable restriction zone during the restricted period.

5. A control method of a hybrid vehicle provided with an internal combustion engine and an electric motor, wherein:
a variable restriction zone, for which a restricted period and a permitted period are set in advance, is provided in advance, the operation of the internal combustion engine is restricted within the variable restriction zone during the restricted period, and the operation of the internal combustion engine is permitted within the variable restriction zone during the permitted period;
when it is determined that the hybrid vehicle is located within the variable restriction zone during the restricted period, the operation of the internal combustion engine is restricted and the electric motor is operated so as to drive the hybrid vehicle; and
when it is determined that a time from a current timing, at which the hybrid vehicle is located outside the variable restriction zone or within the variable restriction zone during the permitted period, to a position start timing, at which the hybrid vehicle starts to be located within the variable restriction zone during the restricted period, is shorter than a predetermined set time, the rate of increase of an SOC of a battery of the hybrid vehicle is increased or the rate of decrease of the SOC is decreased, when compared with a case in which it is determined that the time from the current timing to the position start timing is longer than the set time.
